# EUROPÄISCHE PATENTANMELDUNG

(11) **EP 1 253 366 A1**
(43) Veröffentlichungstag der Anmeldung: **30.10.2002**
(21) Anmeldenummer: 02004380.8
(22) Anmeldetag: 05.03.2002
(51) Int. Cl.: F16L 11/15

(54) **Kunststoffschutzwellrohr**

(30) Priorität: 08.03.2001 DE 10111215
(71) Anmelder: FRÄNKISCHE ROHRWERKE, GEBR. KIRCHNER GmbH & Co., D-97486 Königsberg (DE)
(72) Erfinder: Neubauer, Tilo, 97486 Königsberg (DE); Winkler, Peter, 97486 Königsberg (DE); Schröter, Sören, 96106 Ebern (DE)
(74) Vertreter: Schwabe - Sandmair - Marx

(57) **Zusammenfassung**

Die Erfindung betrifft ein Kunststoffschutzwellrohr mit einem Rohrkörper, der mit umfänglichen Wellungen versehen ist, wobei erfindungsgemäß wenigstens einige Wellungsflanken mit Erstreckungen (16) ausgebildet sind, die sich von einer Wellung (11a) in Richtung zu einer benachbarten Wellung (11b) in Axialrichtung des Rohrkörpers des Kunststoffschutzwellrohres erstrecken.

## Beschreibung

Die Erfindung betrifft ein Kunststoffschutzwellrohr mit einem Rohrkörper, der umfänglich mit Wellungen versehen ist, gemäß dem Oberbegriff des Patentanspruchs 1. Ferner betrifft die Erfindung eine Kunststoffschutzwellrohranordnung mit einem längsgeschlitzten Außenwellrohr und mit einem bevorzugt längsgeschlitzten Innenwellrohr gemäß dem Oberbegriff des Patentanspruchs 10.

Im Stand der Technik werden derartige bekannte Kunststoffschutzwellrohre bzw. -anordnungen eingesetzt, um etwa Glasfaserkabel im Erdreich zu verlegen. Auch werden derartige Wellrohre bzw. Wellrohranordnungen eingesetzt, um als Fluidleitung beispielsweise für Kraftstoffe oder evtl. andere Flüssigkeiten oder Gase zu dienen.

Hier hat sich nun im Stand der Technik der Nachteil ergeben, dass gerade auch beim Verlegen von Glasfaserkabeln im Erdreich die Schutzrohre so stark gebogen werden, dass die Glasfaserkabel über einen bestimmten noch zulässigen Biegeradius hinaus gebogen werden, was zu einer Behinderung der optischen Signaltransmission führen kann oder sogar dazu führt, dass ein derartig abgebogenes oder abgeknicktes Glasfaserkabel vollkommen lichtundurchlässig wird.

Außerdem können entsprechende Rohrleitungen, die etwa für die Kraftstoffförderung eingesetzt werden sollen, gleichermaßen über eine bestimmte zulässige Formgebung hinaus deformiert werden, so dass deren Leitungscharakterisitk nicht mehr für eine adäquate Treibstoffströmung ausreicht.

Ferner kann es vorkommen, dass auch als Wellrohr ausgebildete Rohrleitungen, etwa auch für Treibstoff, mit einer bestimmten Formgebung zum Einsatz gelangen sollen. Im Stand der Technik ist es hier nötig, solche Wellrohre nach deren Herstellung nochmals in einer bestimmten gewünschten Form aufzuheizen, so dass nach dem Abkühlen des Wellrohres der Kunststoff ein Formgedächtnis entwickelt und eine während der zweiten Erhitzung des bereits vorgefertigten Kunststoffwellrohres aufgeprägte Form, wie etwa die Form eines Knies oder dgl. beibehalten wird.

Es ist folglich die Aufgabe gemäß der vorliegenden Erfindung, ein Kunststoffwellrohr bzw. eine entsprechende Anordnung zur Verfügung zu stellen, die den oben aufgezeigten Nachteilen so weit als möglich Abhilfe verschafft. Insbesondere sollen ein Kunststoffschutzwellrohr bzw. eine Kunststoffschutzwellrohranordnung geschaffen werden, die verhindern helfen, dass ein in dem Kunststoffschutzwellrohr bzw. der Kunststoffschutzwellrohranordnung gemäß den jeweiligen Oberbegriffen der unabhängigen Ansprüche aufgenommenes Glasfaserkabel in seiner Lichtleitungsfunktion beeinträchtigt werden kann.

Gemäß der vorliegenden Erfindung werden die oben aufgezeigten Aufgaben durch die Gegenstände der unabhängigen Ansprüche 1 und 10 wenigstens teilweise gelöst. Zweckmäßige Ausführungsformen gehen aus den Unteransprüchen hervor.

Die gemäß der Erfindung erzielbaren Vorteile beruhen auf einem Kunststoffschutzwellrohr, bei dem wenigstens einige Wellungsflanken mit Erstreckungen ausgebildet sind, die sich von einer Wellung in Richtung zu einer benachbarten Wellung in Axialrichtung des Rohrkörpers erstrecken. Hierdurch ist es möglich, dass, wenn das Rohr gebogen wird, es an gewünschten Stellen in seinen Verformungscharakterisitiken eingeschränkt ist, so dass ein in das Kunststoffschutzwellrohr aufgenommenes Glasfaserkabel über den Spielraum hinaus, der durch die Erstreckungen vorgegeben wird, nicht gebogen werden kann. Auch wenn Erdreich, in dem in Kunststoffschutzwellrohren etwa für Hausanschlüsse Glasfaserkabel vergraben und verlegt sind, Bewegungen unterworfen ist, etwa durch sich verdichtende Erdmassen, durch Regen oder durch sonstige Umstände, wird das Rohr gemäß der Erfindung einen ausreichenden Widerstand entgegensetzen, so dass ein in das Wellrohr mit Merkmalen gemäß der Erfindung eingezogenes Glasfaserkabel nicht in unerwünschter Weise verformt werden kann.

Das Kunststoffschutzwellrohr bzw. die Anordnung gemäß der Erfindung können auch zum Schutz von Glasfaserkabeln bzw. Lichtwellenleitern im weiteren Sinne an anderen Orten eingesetzt werden, beispielsweise in einem Motorraum eines Kraftfahrzeuges oder dgl.

Entsprechend kann bei einer Kunststoffschutzwellrohranordnung mit Merkmalen gemäß der Erfindung ebenfalls ein Glasfaserkabel auch noch unter weiter erschwerten äußeren Belastungen vor Umwelteinflüssen geschützt werden, da die Kombination eines längsgeschlitzten Außenwellrohres in Verbindung mit einem Innenwellrohr, das beispielsweise ein Glasfaserkabel aufnehmen kann, an gewünschten Stellen soweit durch eine Struktur verformungsresistent gemacht werden kann, dass durch die Kombination des Außenwellrohres mit dem Innenwellrohr eine funktionseinschränkende Verformung oder eine Beschädigung der in dieser erfindungsgemäßen Anordnung aufgenommenen Glasfaserkabel (oder ähnliches) kaum unter üblichen Bedingungen auftreten kann. Dabei reicht es prinzipiell aus, wenn das Außenwellrohr mit einer entsprechenden Struktur versehen ist, zumal die Wellungen des Innenwellrohres, die in die Wellungen des Außenwellrohres von innen eingreifen, zusätzlich für eine Verformungsresistenz sorgen.

Gemäß der Erfindung kann das Kunststoffschutzwellrohr im Hinblick auf seinen Rohrkörper in Axialrichtung geschlitzt sein, so dass Kabel und insbesondere Glasfaserkabel sehr leicht und unkompliziert in das erfindungsgemäße Kunststoffschutzwellrohr eingelegt werden können und ggf. auch ausgetauscht werden können. Dabei kann das längsgeschlitzte Rohr ein Außenrohr sein, dass ein bevorzugt ebenfalls längsgeschlitztes Innenrohr aufzunehmen vermag. Dieses Innenrohr kann auch als Schlauch ausgebildet sein, der nicht gewellt ist.

Wenn das längsgeschlitzte Innenrohr umfänglich gleichermaßen mit Wellungen versehen ist, kann es alternativ zu dem Außenrohr oder zusätzlich zu dem Außenrohr mit entsprechenden Erstreckungen ausgebildet sein, die eine Stabilisierung des Rohres gegenüber von außen einwirkenden Deformationskräften bewirken.

Zwar können die Erstreckungen, ob sie lediglich am Außenrohr ausgebildet sind oder auch oder stattdessen am Innenrohr, versetzt zueinander über den Umfang angeordnet sein, jedoch hat es sich als besonders vorteilhaft erwiesen, wenn die Erstreckungen axial hintereinander anschließen, so dass sich axial parallele Reihen von entsprechenden Erstreckungen ergeben. Auf diese Weise lassen sich die erwünschten Eigenschaften des Kunststoffschutzwellrohres mit Merkmalen gemäß der Erfindung besonders verlässlich einstellen.

Um zu Verhindern, dass durch Verdrillung des Kunststoffschutzwellrohres mit Merkmalen gemäß der Erfindung, dieses bei entsprechenden Belastungen dennoch verformt werden kann, sollten wenigstens zwei über den Umfang bevorzugt umfänglich winkelmäßig gleichmäßig verteilte Erstreckungen vorgesehen werden, die wiederum axial zu Reihen hintereinander angeordnet sein sollten. Insbesondere ergeben sich Vorteile, wenn wenigstens drei entsprechende Erstreckungen über den Umfang gleichmäßig verteilt vorgesehen sind, da drei Punkte jeweils eine Ebene bilden, so dass sich Stabilisierungsebenen über die jeweiligen drei Erstreckungen ergeben, die der Beschädigung gerade von Glasfaserkabeln sehr vorteilhaft entgegenwirken können. Entsprechendes gilt auch für vier und mehr Erstreckungen, die über den Umfang gleichmäßig ausgebildet sind.

Soll dem erfindungsgemäßen Rohr die Aufgabe zukommen, beispielsweise als Kraftstoffleitung zu dienen, kann es vorteilhaft sein, wenn dem Rohr eine bestimmte Form vorgebbar ist, die das Rohr beibehält und nicht wieder aufgibt. Für diesen Fall ist es vorteilhaft, wenn die gemäß der Erfindung vorzusehenden Erstreckungen als Rastabschnitte ausgebildet sind, wobei in gegenüberliegenden bzw. anschließenden Wellungen zu den Rastabschnitten korrespondierende Aufnahmeabschnitte vorgesehen sind. Sind beispielsweise über den Umfang eines solchen Rohres vier Reihen von aneinander anschließenden Rastabschnitten und korrespondierenden Aufnahmeabschnitten vorgesehen, so lässt sich durch Einrasten von Rastabschnitten in Aufnahmeabschnitte einer Reihe beispielsweise ein sehr enges Knie einstellen, das dann aufgrund des mechanisch stabilen Rasteingriffes beibehalten wird. Eine Wärmebehandlung, wie dies nach dem Stand der Technik erforderlich ist, und das einen zusätzlichen Arbeitsschritt bedeutet, ist hier nicht nötig. Dagegen kann jedes gemäß dieser Ausführungsvariante nach der Erfindung hergestellte Kunststoffschutzwellrohr sehr flexibel eingesetzt werden, da das Wellrohr in seiner Formgebung zwar variabel ist, und diese Formgebung, nachdem sie einmal eingestellt worden ist, reversibel über beliebige Zeiträume beibehalten werden kann.

Es kann auch von Vorteil sein, wenn das Innenrohr mit Rasterstreckungen und/oder Rastabschnitt-Eingriffsbereichen versehen ist und entsprechend das Außenrohr mit passenden Rastabschnitt-Eingriffsbereichen und/oder Rasterstreckungen versehen ist, um miteinander in einen Eingriff gelangen zu können. Bei einer Anordnung geschlitzter Rohre kann dieser Eingriff dabei behilflich sein, das Innenrohr besser im Außenrohr festzuhalten.

Die betreffenden Erstreckungen können jeweils an beiden Flankenseiten der Wellungen vorgesehen sein, so dass die Erstreckungen einer Wellung gegen die Erstreckungen der benachbarten Wellung anstoßen können.

Das erfindungsgemäße Rohr bzw. die Anordnung kann einen beliebigen Querschnitt haben, etwa oval, angenähert rechteckig oder dgl.

Zwar ist es auch möglich, an einer Wellung jeweils auf einer axialen Seite einen Rastabschnitt vorzusehen und an der gegenüberliegenden axialen Seite derselben Wellung einen Aufnahmeabschnitt vorzusehen, der dann dazu bestimmt ist, mit dem Rastabschnitt einer anschließenden Wellung ggf. in Eingriff zu treten, jedoch scheint es derzeit aus fertigungstechnischen Gründen günstiger zu sein, wenn jeweils abwechselnd eine Wellung lediglich Aufnahmeabschnitte und eine anschließende Wellung jeweils lediglich Rastabschnitte aufweist.

Aus fertigungstechnischen Gründen, da entsprechende Wellrohre im Korrugator hergestellt werden, kann es nötig sein, sowohl Aufnahmeabschnitte als auch die Rastabschnitte und allgemein die Erstreckungen entweder in der Entformungsebene der Formbacken des Formkanales auszubilden, oder aber in der Ebene senkrecht zu der Entformungsebene. Ansonsten, falls die betreffenden Erstreckungen, Rasterstreckungen oder dgl. außerhalb dieser Ebenen ausgebildet werden, lassen sich die entsprechend ausgebildeten Kunststoffschutzwellrohre nicht von den Halbformen der umlaufenden Formketten Entformen oder nur mit sehr großer Gewalt, was zu Beschädigungen des Wellrohrproduktes führen muss.

In Bezug auf die erfindungsgemäße Kunststoffschutzwellrohranordnung ergeben sich auch günstige Varianten, wenn das Innenwellrohr eine Verdrehsicherung aufweist, die in den Schlitz des Außenrohres eingreift, wobei die Verdrehsicherung eine in Axialrichtung wie auch umfänglich erstreckte Struktur aufweist, die wenigstens über zwei benachbarte Wellungen erstreckt ist. Durch diese beispielsweise in ihrer querschnittlichen Form auch linsenartige Struktur kann die Verformbarkeit der Gesamtanordnung ebenfalls reguliert bzw. eingeschränkt werden, so dass eine weitere gesteuerte bzw. kontrollierte Einschränkung der Bewegbarkeit der Anordnung erzielt werden kann, so dass auch unter stärkeren Belastungen die Anordnung nicht soweit verformt werden kann, dass ein darin aufgenommenes Glasfaserkabel beschädigt wird. Beispielsweise in Gegenden, in denen starke Erdbewegungen auftreten können, beispielsweise in morastigen Gegenden, kann auch eine derartige Kunststoffschutzwellrohranordnung gemäß der Erfindung eine Verformung verhindern.

Auch hier können über den Umfang der Gesamtanordnung wenigstens zwei bevorzugt linsenförmige Strukturen ausgebildet sein, die wenigstens zwei aufeinanderfolgende Wellungen miteinander verbinden, wobei dann zur Beibehaltung der ausreichenden Flexibilität jeweils ein Wellental zwischen in Axialrichtung aufeinanderfolgenden Strukturen wenigstens teilweise frei bleiben sollte.

Insgesamt sollten über den Umfang der Anordnung wenigstens drei, bevorzugt vier Strukturen ausgebildet sein, die winkelmäßig bevorzugt gleichmäßig über den Umfang der Anordnung verteilt sind. Eine dieser Strukturen dient dann bevorzugt gleichermaßen als Verdrehsicherung für das Innenwellrohr gegenüber dem Außenwellrohr.

Nachfolgend wird die vorliegende Erfindung anhand der beigefügten Figuren und unter Bezugnahme auf bevorzugte Ausführungsformen mit Merkmalen gemäß der Erfindung näher erläutert. Dabei werden weitere Zielsetzungen, erfindungsgemäße Merkmale sowie Vorteile offenbart. Es zeigen:
- Fig. 1a: eine seitliche Ansicht eines Kunststoffschutzwellrohres mit Merkmalen gemäß der Erfindung;
- Fig. 1b: einen Querschnitt des Rohres gemäß Fig. 1a;
- Fig. 2a: eine weitere Ausführungsform eines Kunststoffschutzwellrohres in einer seitlichen Ansicht;
- Fig. 2b: eine Einzelheit des Kunststoffschutzwellrohres gemäß Fig. 2a in der gleichen Perspektive;
- Fig. 3: eine weitere Ausführungsform eines Kunststoffschutzwellrohres in einer Seitenansicht;
- Fig. 4a: einen Schnitt durch eine Kunststoffschutzwellrohranordnung mit Merkmalen gemäß der Erfindung;
- Fig. 4b: ein Einzelteil der Anordnung gemäß Fig. 4a in einer querschnittlichen Darstellung;
- Fig. 4c: einen anderen Bestandteil der Anordnung gemäß Fig. 4a ebenfalls in einer querschnittlichen Ansicht;
- Fig. 5a-5c: Seitenansichten der Bestandteile gemäß den Fig. 4a bis 4c; und
- Fig. 5d und 5e: Einzelheiten gemäß den Fig. 5a und 5b in längsschnittlichen Darstellungen.

In Fig. 1a ist eine erste Ausführungsform eines Kunststoffschutzwellrohres mit dem Bezugszeichen 10 benannt worden. Das Wellrohr 10 weist Wellungen 11 und Wellentäler 12 auf. Die Wellungen 11 sind mit Erstreckungen 14a, 14b versehen, die sich in Axialrichtung des Wellrohres 10 erstrecken. Wird das Rohr 10 gemäß der Fig. 1a deformiert, stoßen die Erstreckungen 14a, 14b benachbarter Wellungen 11 aneinander an und die mögliche Verformung des Wellrohres wird eingeschränkt.

Dabei ist es natürlich von Vorteil, wenn das betreffende Wellrohr von vorne herein mit einer ausreichenden Eigensteifigkeit ausgestattet ist. Sollte ein derartiges Wellrohr mit einer zu dünnen Wandstärke oder einem zu wenig wiederstandfähigem Material ausgebildet sein, werden die Erstreckungen 14a, 14b auch relativ leicht deformierbar sein, so dass die Erstreckungen nur wenig zur Einschränkung der Verformbarkeit des Rohres 10 beitragen könnten.

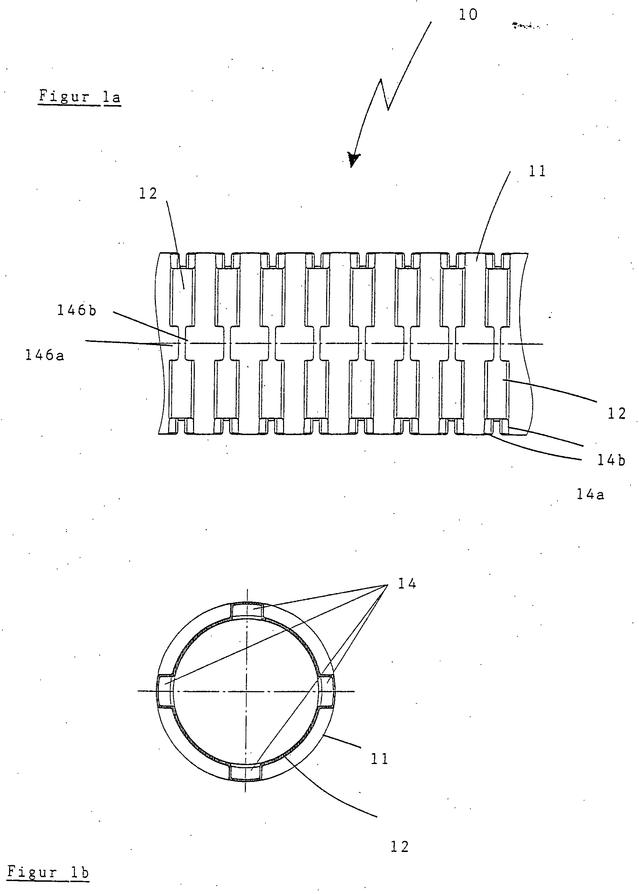

Gemäß Fig. 1b sind im Querschnitt insbesondere die Erstreckungen 14 erkennbar, da das Wellrohr gemäß Fig. 1a gemäß der Darstellung der Fig. 1b im Bereich eines Wellentales 12 und den dort nur vorhandenen Erstreckungen 14 geschnitten worden ist.

Je nach dem, wie weit sich die Erstreckungen 14 in ein Wellental erstrecken, wird das Rohr in seiner Verformbarkeit entsprechend eingeschränkt.

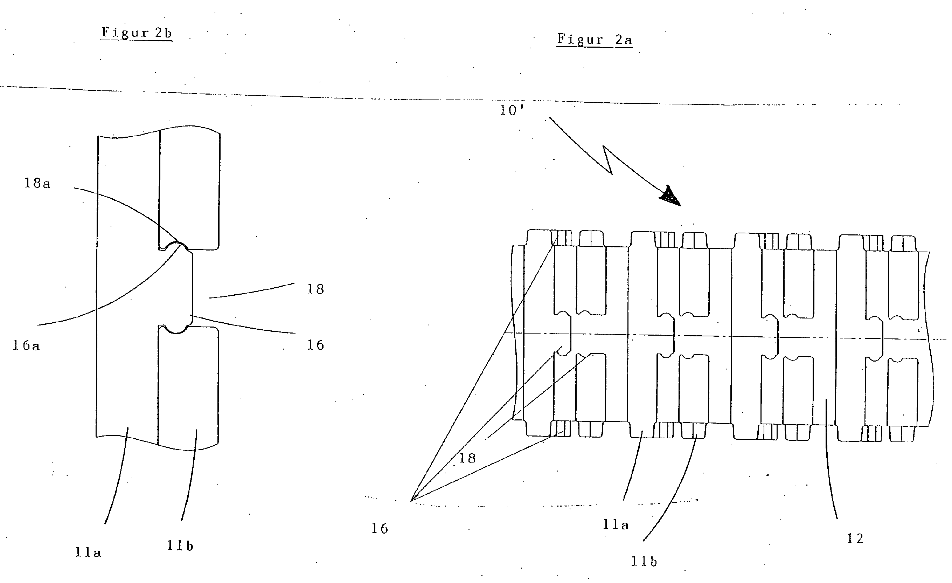

Die Fig. 2a zeigt eine weitere Ausführungsform eines Kunststoffschutzwellrohres mit Merkmalen gemäß der Erfindung. Diese weitere Ausführungsform 10' ist mit speziellen Erstreckungen an jeder zweiten Wellung 11a versehen, die sich in Axialrichtung von einer Flanke einer entsprechenden Wellung 11a erstreckt. Diese Erstreckungen 16 sind als Rasterstreckungen ausgebildet und sind dazu in der Lage, mit einem dieser Rasterstreckung 16 zugeordneten korrespondierenden Aufnahmeabschnitt 18 in einen Rasteingriff zu treten. Diese Aufhahmeabschnitte 18 sind in den jeweils zweiten Wellungen 11b ausgeformt, die den jeweiligen Seiten bzw. Flanken mit den Rasterstreckungen 16 an den anderen Wellungen 11a zugewandt sind.

In Fig. 2b ist eine Rasterstreckung 16 an einer Flanke einer Wellung 11a dargestellt, wie sie im Rasteingriff mit einem korrespondierenden Aufnahmeabschnitt 18 einer benachbarten Wellung 11b in einen Rasteingriff gelangt. In eine solchen Fall wird das Wellental bzw. der Boden des Wellentales gestaucht und nach innen ausgelenkt, so dass der freie Leitungsquerschnitt des Wellenrohres 10' gemäß Fig. 2a leicht eingeschränkt werden dürfte. Die Rasterstreckung 16 greift mit ihren Rastschultern 16a in eine korrespondierende Eingriffsform 18a des Aufnahmeabschnitts 18 ein.

Dieser Rasteingriff ist vergleichsweise stabil und kann nur durch manuelle Beeinflussung wieder aufgenommen werden. D.h., es ist auf diese Weise möglich, eine definierte Leitungsverlegung in vier verschiedene Raumrichtungen willentlich vorzugeben, ohne dass das Rohr durch einen weiteren Arbeitsgang unter thermischem Einfluss in eine definierte Position gebracht werden muss. Werden sämtliche der Rasterstreckungen 16, beispielsweise drei, vier oder mehr, die über den Umfang einer Wellungsflanke vorgesehen sind, in einen Rasteingriff gebracht, lässt sich auf diese Weise auch eine mechanische Stabilisierung des Rohres bzw. eine Einschränkung der Verformbarkeit des Wellrohres erzielen.

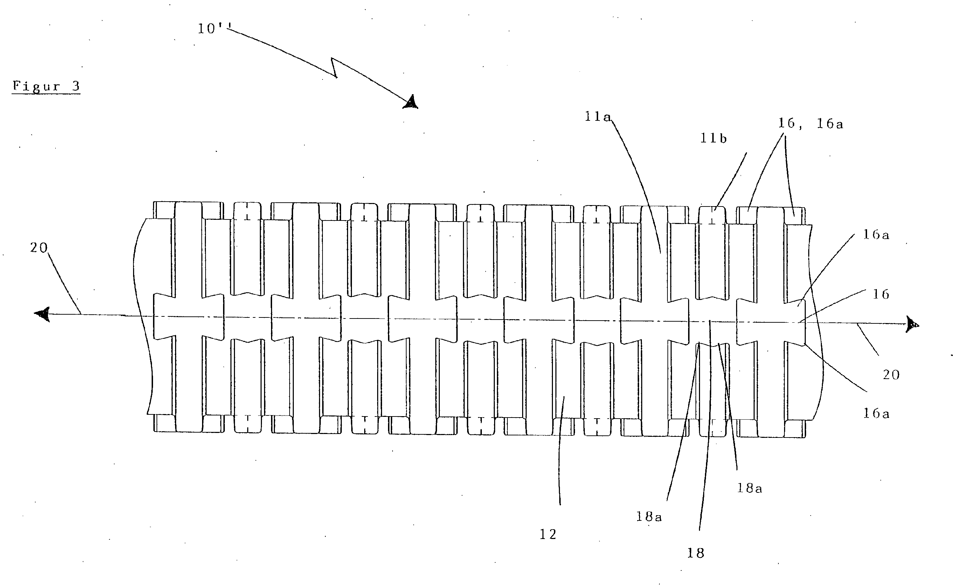

Eine weitere Ausführungsform eines Kunststoffschutzwellrohres 10'' wird in Fig. 3 vorgestellt. Bei diesem Wellrohr 10'' ist jeweils eine Wellung 11a in beiden axialen Erstreckungsrichtungen 20 mit einer Rasterstreckung 16 versehen. Die Rasterstreckung 16 ist jeweils mit zwei Rastschultern 16a ausgebildet, um in Eingriff mit Aufnahmeabschnitten 18 einer benachbarten Wellung 11b gelangen zu können. Die Wellentäler 12 zwischen den einzelnen Wellungen 11a, 11b stellen noch freie Räume zur Verfügung, so dass das Wellrohr 10" nach wie vor eine ausreichende Flexibilität aufweist, so dass noch eine weitgehende Verformbarkeit des Wellrohres möglich ist. Wird jedoch eine Rasterstreckung 16 über ihre Rastschultern 16a in Eingriff zu den korrespondierenden Ausformungen 18a eines Aufnahmeabschnittes 18 gebracht, so kann das Wellrohr 10' nachhaltig reversibel verformt werden. Soll die Verformung, die prinzipiell reversibel ist, irreversibel gemacht werden, könnte beispielsweise durch Erwärmung, durch einen Kontaktkleber oder andere Maßnahmen der Rasteingriff unauflösbar gemacht werden. Regelmäßig sollte jedoch der Rasteingriff für eine seitlich beständige Verformung des erfindungsgemäßen Wellrohres 10' ausreichen. Die Darstellung lässt erkennen, dass jeweils alle 90° über den Umfang des Rohres 10' gesehen, eine Rasterstreckung vorgesehen ist und korrespondierend dazu über jeweils 90° über den Umfang verteilt ein Aufnahmeabschnitt 18 vorgesehen ist. Diese Ausgestaltung lässt wiederum eine kontrollierte Verformung des Wellrohres 10'' in sämtliche vier Richtung zu, um die Achse 20 des Wellrohres 10" möglich sind.

In den Figuren sind gleiche oder wenigstens funktionsgleiche Bestandteile jeweils durch entsprechende bzw. identische Bezugszeichen repräsentiert, so dass sich eine wiederholende Beschreibung prinzipiell erübrigt.

In Fig. 4a ist ein Querschnitt durch eine Ausführungsform einer Kunststoffschutzwellrohranordnung dargestellt, die Merkmale gemäß der Erfindung aufweist. Hier wird ein bevorzugt gewelltes Innenrohr 28 von einem gewellten Außenrohr 30 umgeben. Sowohl das Innenrohr 28 als auch das Außenrohr 30 weisen jeweils einen Schlitz 22, 24 auf. Über diesen Schlitz lassen sich, falls gewünscht, Kabel und insbesondere Glasfaserkabel in die Anordnung einlegen, und nachdem das Innenrohr 28 von dem Außenrohr 30 umgeben ist, wird das Kabel bzw. das Glasfaserkabel zuverlässig von der Außenwelt abgeschirmt.

Das Innenrohr 28 weist eine Verdrehsicherung 26 auf, die dafür sorgt, dass das Innenrohr gegenüber dem Außenrohr 30 in einer definierten Position gehalten wird, wobei die Verdrehsicherung 26 durch die Endabschnitte des äußeren Wellrohres 30, die den Schlitz 24 des Außenrohres 30 ergeben, gehalten wird.

Wellungen 11 der Schutzrohranordnung 10''' sind mit Erstreckungen 16 ausgebildet, die die Anordnung 10''' in ihrer Flexibilität beschränken, jedoch in ihrer mechanischen Wiederstandsfähigkeit bestärken. Auch die Verdrehsicherung 26 ist bevorzugt als entsprechende Erstreckung ausgebildet, wie sie durch die Erstreckungen 16 repräsentiert werden. Auf diese Weise ist es möglich, die Bewegbarkeit der Schutzrohranordnung gemäß Fig. 4a ebenfalls stark einzuschränken, insoweit dies gewünscht sein sollte.

Prinzipiell können auch die Ausführungsformen gemäß den Fig. 1a bis 3 mit in Axialrichtung erstreckten Längsschlitzen ausgebildet sein. Dort wie auch bei der Ausführungsform gemäß der Fig. 4a ist es dann möglich, Kabel und insbesondere Glasfaserkabel auch nachträglich ohne großen Montageaufwand einzulegen oder zu entnehmen bzw. auszutauschen.

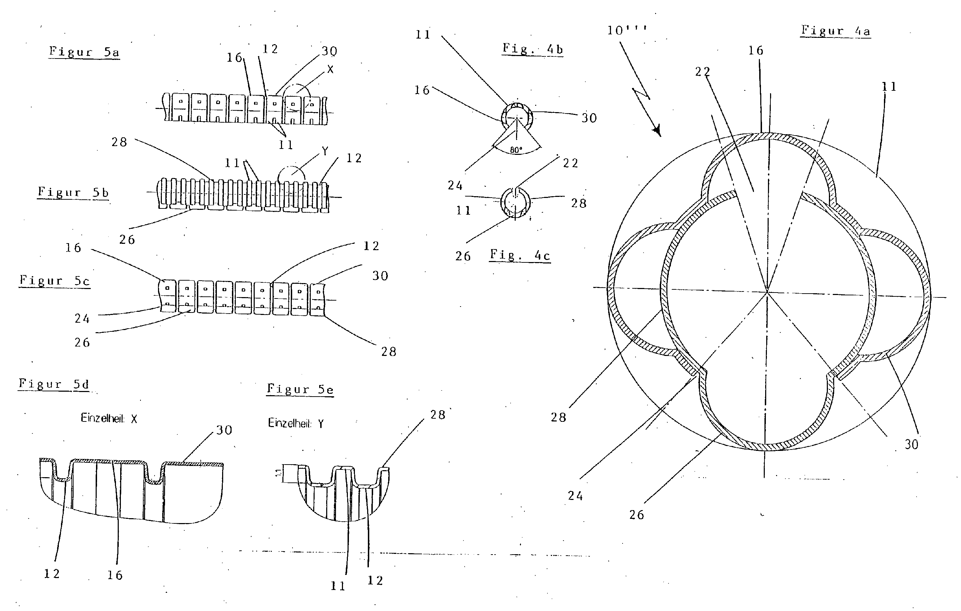

Die Fig. 4b und 4c zeigen die Einzelheiten des Außenrohres 30 und des Innenrohres 28 der Anordnung gemäß Fig. 4a. Zu erkennen sind in den Fig. 4b und 4c insbesondere nochmals die jeweiligen Schlitze 24, 22 des Außen- und des Innenrohres 28, 30.

Insbesondere trägt auch zur Versteifung der Anordnung gemäß den Fig. 4a bis 4c bei, dass die Wellungen des Innenrohres in die Wellungen 11 des Außenrohres eingreifen.

Dies kann insbesondere auch aus den Fig. 5a bis 5c sowie 5d und 5e geschlossen werden. Die einzelnen Wellungen 11 des Innenrohres gemäß Fig. 5b sind derart beabstandet, dass sie in die Wellungen 11 des Außenrohres gemäß Fig. 5a einzugreifen vermögen. Die Versteifungserstreckungen 16 gemäß Fig. 5a sind an ihrem Innenumfang so ausgebildet, dass sie diesen Eingriff nicht behindern, sondern lediglich eine Verringerung der Gesamtflexibilität der Wellrohranordnung gemäß Fig. 4a bzw. gemäß Fig. 5c veranlassen. Dies gilt auch für die Verdrehsicherung bzw. die Versteifungserstreckung 26 gemäß Fig. 5b.

In Fig. 5c ist zu erkennen, wie die Verdrehsicherung 26, die auch als Versteifungserstreckung dient, in dem Schlitz 24 des Außenrohres zu liegen kommt.

Aus den Fig. 5d und 5e ist erkennbar, dass die Wellungsabstände des Innen- wie auch des Außenrohres 28, 30 so bemessen sind, dass sie ineinander greifen können, was ebenfalls zur Stabilisierung beiträgt.

## Patentansprüche

1. Kunststoffschutzwellrohr
mit einem Rohrkörper, der mit umfänglichen Wellungen versehen ist,
**dadurch gekennzeichnet,**
**dass** wenigstens einige Wellungsflanken mit Erstreckungen ausgebildet sind, die sich von einer Wellung in Richtung zu einer benachbarten Wellung in Axialrichtung des Rohrkörpers erstrecken.

2. Kunststoffschutzwellrohr nach Anspruch 1, **dadurch gekennzeichnet, dass** der Rohrkörper in Axialrichtung geschlitzt (22, 24) ist.

3. Kunststoffschutzwellrohr nach Anspruch 2, **dadurch gekennzeichnet, dass** das längsgeschlitzte Rohr (30) ein Außenrohr ist, in welches ein bevorzugt selbst ebenfalls längsgeschlitztes Innenrohr (28) eingesetzt ist.

4. Kunststoffschutzwellrohr nach Anspruch 3, **dadurch gekennzeichnet, dass** das bevorzugt längsgeschlitzte Innenrohr (28) umfänglich mit Wellungen (11) versehen ist, die bevorzugt alternativ anstelle des Außenrohres oder zusätzlich zu dem Außenrohr (30) mit entsprechenden Erstreckungen (14, 14a, 14b; 16, 16a; 16, 26) ausgebildet sind.

5. Kunststoffschutzwellrohr nach einem der Ansprüche 1 bis 4, **dadurch gekennzeichnet, dass** die Erstreckungen (16, 16a; 16, 26) axial hintereinander hintereinander anschließen.

6. Kunststoffschutzwellrohr nach einem der Ansprüche 1 bis 5, **dadurch gekennzeichnet, dass** die Erstreckungen (16, 16a; 16, 26) an wenigstens zwei, bevorzugt drei umfänglich insbesondere winkelmäßig gleichmäßig verteilten Stellen vorgesehen sind.

7. Kunststoffschutzwellrohr nach einem der Ansprüche 1 bis 6, **dadurch gekennzeichnet, dass** die Erstreckungen (16, 16a) als Rastabschnitte ausgebildet sind, wobei in gegenüberliegenden bzw. anschließenden Wellungen (11b) zu den Rastabschnitten korrespondierende Aufnahmeabschnitte (18) vorgesehen sind.

8. Kunststoffschutzwellrohr nach einem der Ansprüche 1 bis 7, **dadurch gekennzeichnet, dass** die Erstreckungen (16; 14a, 14b) jeweils an beiden Flankenseiten wenigstens einige der Wellungen vorgesehen sind.

9. Kunststoffschutzwellrohr nach Anspruch 8, **dadurch gekennzeichnet, dass** abwechselnd an einer Wellung (11a) beidseitig erstreckte Rastabschnitte (16) und in einer benachbarten Wellung (11b) korrespondierende Aufnahmeabschnitte (18) vorgesehen sind.

10. Kunststoffschutzwellrohranordnung mit einem längsgeschlitzten Außenrohr (30) und mit einem bevorzugt längsgeschlitzten Innenwellrohr (28), **dadurch gekennzeichnet, dass** wenigstens zwei benachbarte Wellungen (11) des Außenwellrohres (30) über wenigstens eine in Axialrichtung wie auch umfänglich erstreckte Struktur (16) verbunden sind, wobei bevorzugt die Wellungen (11) des Innenwellrohres (28) in die Wellungen des Außenwellrohres eingreifen.

11. Kunststoffschutzwellrohranordnung nach Anspruch 10, **dadurch gekennzeichnet, dass** das Innenwellrohr (28) eine Verdrehsicherung (26) aufweist, die in den Schlitz (24) des Außenwellrohres eingreift, wobei bevorzugt die Verdrehsicherung (26) eine in Axialrichtung wie auch umfänglich erstreckte Struktur (26) aufweist, die wenigstens über zwei benachbarte Wellungen erstreckt ist.

12. Kunststoffschutzwellrohranordnung nach Anspruch 10 oder Anspruch 11, **dadurch gekennzeichnet, dass** über den Umfang der Anordnung (10''') wenigstens zwei bevorzugt linsenförmige Strukturen (16) ausgebildet sind, die wenigstens zwei aufeinanderfolgende Wellungen miteinander verbinden, wobei jeweils ein Wellental zwischen in Axialrichtung aufeinanderfolgenden Strukturen (16; 26) wenigstens teilweise frei bleibt.

13. Kunststoffschutzwellrohranordnung nach einem der Ansprüche 11 oder 12, **dadurch gekennzeichnet, dass** über den Umfang der Anordnung wenigstens drei, bevorzugt vier Strukturen ausgebildet sind, die winkelmäßig bevorzugt gleich über den Umfang der Anordnung (10''') verteilt sind, wobei eine Struktur (26) als Verdrehsicherung für das Innenwellrohr (28) gegenüber dem Außenwellrohr (30) dient.
